# EUROPEAN PATENT SPECIFICATION

(11) **EP 3 783 853 B1**
(45) Date of publication and mention of the grant of the patent: **26.07.2023**
(21) Application number: 18915594.8
(22) Date of filing: 16.04.2018
(51) Int. Cl.: H04L 5/00, H04L 27/26

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 24.02.2021
(73) Proprietor: NTT DOCOMO, INC., Chiyoda-ku Tokyo 100-6150 (JP)
(72) Inventor: MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/015738
(87) International publication number: WO 2019/202639

(56) References cited:
- WO-A1-2015/108008
- WO-A1-2018/028257
- HUAWEI ET AL: "PUSCH design for short TTI", 3GPP DRAFT; R1-164820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051096317, Retrieved from the Internet: URL:http://www.3gpp.org/ftp/tsg_ran/WG1_RL 1/TSGR1_85/Docs/ [retrieved on 2016-05-14]
- ERICSSON: "On UCI Transmission on PUSCH", 3GPP DRAFT; R1-1714427, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051317206, Retrieved from the Internet: URL:http://www.3gpp.org/ftp/Meetings_3GPP_ SYNC/RAN1/Docs/ [retrieved on 2017-08-20]
- QUALCOMM INCORPORATED: "UCI piggyback on PUSCH", 3GPP DRAFT; R1-1713437 UCI PIGGYBACK ON PUSCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051316239, Retrieved from the Internet: URL:http://www.3gpp.org/ftp/Meetings_3GPP_ SYNC/RAN1/Docs/ [retrieved on 2017-08-20]
- HUAWEI ET AL: "UCI piggyback on PUSCH", 3GPP DRAFT; R1-1712195, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051315012, Retrieved from the Internet: URL:http://www.3gpp.org/ftp/Meetings_3GPP_ SYNC/RAN1/Docs/ [retrieved on 2017-08-20]
- "UCI multiplexing on PUSCH", 3GPP TSG-RAN WG1#92bis R1-1805053, 7 April 2018 (2018-04-07), XP051414361, Retrieved from the Internet: URL:http://www.3gpp.org/ftp/TSG_RAN/WG1_RL 1/TSGR1_92b/Docs/Rl-1805053.zip [retrieved on 2018-06-22]
- "Remaining details on DM-RS", 3GPP TSG-RAN WG1 #92bis R1-1805045, 7 April 2018 (2018-04-07), XP051414353, Retrieved from the Internet: URL:http://www.3gpp.org/ftp/TSG_RAN/WG1_RL 1/TSGR1_92b/Docs/Rl-1805045.zip [retrieved on 2018-06-22]
- "Remaining issues for multiplexing UCI on PUSCH", 3GPP TSG-RAN WG1 AH 1801 R1-1801000, January 2018 (2018-01), XP051382211, Retrieved from the Internet: URL:http://www.3gpp.org/ftp/TSG_RAN/WG1_RL 1/TSGR1_AH/NR_AH_1801/Docs/R1-1801000.zip [retrieved on 2018-06-22]

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see Non-Patent Literature 1). In addition, successor systems of LTE are also under study for the purpose of achieving further broadbandization and increased speed beyond LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," and so on).

In existing LTE systems (for example, LTE Rel. 8 to 13), downlink (DL) and/or uplink (UL) communication are performed using 1-ms subframes (also referred to as "transmission time intervals (TTIs)" and so on). These subframes are the time unit for transmitting one channel-encoded data packet, and serve as the unit of processing in, for example, scheduling, link adaptation, retransmission control (HARQ (Hybrid Automatic Repeat reQuest)) and so on.

Also, in existing LTE systems (for example, LTE Rel. 8 to 13), a user terminal transmits uplink control information (UCI) by using at least one of an uplink control channel (for example, a PUCCH (Physical Uplink Control CHannel)) and an uplink data channel (for example, a PUSCH (Physical Uplink Shared CHannel)). The format of this uplink control channel is referred to as "PUCCH format (PF (PUCCH Format))" and/or the like.
HUAWEI ET AL: "PUSCH design for short TTI", 3GPP DRAFT; R1 -164820, no. Nanjing, China, 14 May 2016, discusses a PUSCH configuration comprising 2 symbols, wherein 1 symbol contains DM-RS.
ERICSSON: "On UCI Transmission on PUSCH", 3GPP DRAFT; R1-1714427, no. Prague, Czech Republic; 20 August 2017, discusses supporting UCI on PUSCH for both DFTS-OFDM abd OFDM based PUSCH.
QUALCOMM INCORPORATED: "UCI piggyback on PUSCH", 3GPP DRAFT; R1-1713437, no. Prague, Czech Republic; 20 August 2017, discusses UCI piggybacking on PUSCH.
HUAWEI ET AL: "UCI piggyback on PUSCH", 3GPP DRAFT; R1-1712195, no. Prague, Czech Republic; 20 August 2017, discusses UCI piggyback on PUSCH.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., NR), in order to obtain a frequency diversity gain, a study is underway to support frequency hopping of UL channels (it is also referred to as, for example, a UL shared channel (Physical Uplink Shared Channel (PUSCH)) and/or a UL control channel (Physical Uplink Control Channel (PUCCH)), an upstream signal and so on).

Furthermore, In NR, flexible control of data (for example, PUSCH and so on) allocation is under study. For example, controlling data allocation in units of one or more symbols (also referred to as minislots, for example) included in a slot is also under study.

However, when at least one of frequency hopping and data allocation in units of symbols is applied to a UL channel, how to control a demodulation reference signal (DMRS) of the UL channel raises a problem. For example, when UCI is transmitted using a PUSCH (UCI on PUSCH), how to control transmission of UCI and a DMRS in a PUSCH raises a problem.

Therefore, it is an object of the present disclosure to provide a user terminal and a radio communication method that can appropriately transmit uplink control information and a DMRS using at least an uplink shared channel.

### Solution to Problem

The mentioned problems are solved by the subject-matter of the independent claims.

Further preferred embodiments are defined in the dependent claims.

Subject matter discussed throughout the following but not falling under the scope of the claims does not form part of the invention.

### Advantageous Effects of Invention

According to the present invention, it is possible to appropriately transmit uplink control information and a DMRS using at least an uplink shared channel.

### Brief Description of Drawings

Figs. 1A and 1B are diagrams to show an example of UCI on PUSCH.
Figs. 2A and 2B are diagrams to show another example of UCI on PUSCH.
Fig. 3 is a diagram to show an example of a schematic structure of a radio communication system.
Fig. 4 is a diagram to show an example of an overall structure of a radio base station.
Fig. 5 is a diagram to show an example of a functional structure of a radio base station.
Fig. 6 is a diagram to show an example of an overall structure of a user terminal according to one embodiment of the present invention.
Fig. 7 is a diagram to show an example of a functional structure of a user terminal according to one embodiment of the present invention.
Fig. 8 is a diagram to show an example of a hardware structure of a radio base station and a user terminal.

### Description of Embodiments

For future radio communication systems (hereinafter, also referred to as NR), transmission of data is not limited to be performed in units of slot and transmission of data and so on by using scheduling in units of minislot (for example, in units of symbol) is under study.

A slot is one of basic transmission units, and one slot is comprised of a given number of symbols. For example, in the normal CP, a slot period is comprised of a first number of symbols (for example, 14 symbols), and in an extended CP, a slot period is comprised of a second number of symbols (for example, 12 symbols).

The minislot corresponds to a period comprised of equal to or less than a given number of symbols (for example, 14 symbols (or 12 symbols)). As an example, in DL transmission (for example, PDSCH transmission), the minislot may be comprised of a given number of symbols (for example, the number of symbols is two, four, or seven).

### <Data mapping type>

Different resource allocation types (for example, type A and type B) may be used as data (for example, PUSCH) allocation.

For example, it is assumed that type A (also referred to as PUSCH mapping type A) is used in UL (for example, PUSCH transmission). In this case, the PUSCH top position in a slot is selected from a preset fixed symbols (for example, symbol index #0), and the number of symbols to which the PUSCH is allocated (for example, a PUSCH length) is selected from the range from a given value (Y) to 14. Note that Y may be a value larger than 1 (Y > 1) or may be 1 or more. For example, Y may be 4.

In Type A, a demodulation reference signal (DM-RS) used for PUSCH demodulation is arranged in one or more symbols (also referred to as DMRS symbols). The first DMRS symbol (l₀) may be indicated by a higher layer parameter (for example, UL-DMRS-typeA-pos). For example, the higher layer parameter may indicate whether or not l₀ is 2 or 3 (may indicate whether the first DMRS symbol is symbol index 2 or 3) .

In type A, a DMRS may be arranged in one or more additional symbols in addition to the first DMRS symbol (l₀). At least one of the number and position of the additional DMRS symbols may be reported from a base station to a UE by higher layer signaling. For example, the UE determines at least one of the number and position of the additional DMRS symbols based on the duration to which the PUSCH is allocated (for example, the number of symbols) and the information regarding the number of the additional DMRS symbols reported by the higher layer parameter (for example, UL-DMRS-add-pos). UL-DMRS-add-pos may be interpreted as DM-RS-add-pos or dmrs-AdditionalPosition.

In Type A, the position 1 of the DMRS symbol in the time direction may be defined with the start symbol (symbol #0) of the slot as a reference (reference point).

Next, a case where type B (also referred to as PUSCH mapping type B) is used in UL (for example, PUSCH transmission) is assumed. In this case, the number of symbols to which the PUSCH is allocated (for example, a PUSCH length) is selected from the preset number of candidate symbols (one to fourteen symbols), and the PUSCH top position in a slot is set to any location (symbol) in the slot.

In PUSCH mapping type B, a base station reports the PUSCH start symbol (S) and the number of consecutive symbols (L) from the start symbol to a UE. The number of consecutive symbols (L) from the start symbol is also referred to as a PUSCH length. In this way, in PUSCH mapping type B, the PUSCH top position is set flexibly.

In Type B, a DMRS used for PUSCH demodulation is arranged in one or more symbols (also referred to as DMRS symbols). The first DMRS symbol (l₀) for the DMRS may be a fixed symbol. For example, the first DMRS symbol may be equal to the PUSCH start symbol (l₀ = 0).

In type B, a DMRS may be arranged in one or more additional symbols in addition to the first symbol (l₀). At least one of the number and position of the additional DMRS symbols may be reported from a base station to a UE by higher layer signaling. For example, the UE determines at least one of the number and position of the additional DMRS symbols based on the duration to which the PUSCH is allocated (for example, the number of symbols) and the information regarding the number of the additional DMRS symbols reported by the higher layer parameter(for example, UL-DMRS-add-pos) .

Further, in type B, the position 1 of the DMRS symbol in the time direction may be defined with the start symbol of the scheduled PUSCH resource as a reference (reference point).

### <DMRS Configuration Type>

In NR, a study is underway to determine a resource (RE) mapping pattern for a DMRS used for a shared channel (PUSCH, PDSCH) according to a DMRS configuration type. The DMRS configuration type may be referred to as a DMRS type. For a UE, the DMRS configuration type for each channel may be set from the base station using higher layer signaling.

Here, the higher layer signaling may be, for example, any of RRC (Radio Resource Control) signaling, MAC (Medium Access Control) signaling, broadcast information and so on, or a combination thereof.

For the MAC signaling, for example, a MAC control element (MAC CE), a MAC PDU (Protocol Data Unit), or the like may be used. The broadcast information may be, for example, a master information block (MIB), a system information block (SIB), a minimum system information (Remaining Minimum System Information (RMSI)), other system information (OSI), or the like.

The UE may determine that the DL (UL) DMRS is, for example, of Type 2 if the RRC information element ("dmrs-Type" information element) is set for DL (UL), or Type 1 if not set.

In DMRS configuration type 1, the DMRS to be mapped has a comb-like (comb-tooth-shaped) configuration in the frequency direction. One of elements forming the comb is a DMRS and the other is null. With the null resource, nothing may be transmitted or data may be transmitted. That is, in DMRS configuration type 1, six REs may be used as the DMRS in one PRB and one port.

In DMRS configuration type 2, for example, four REs may be mapped to one PRB and one port. Note that, it has been described that the two DMRS configuration types are defined in the specification, but three or more types may be defined in the specification.

### <UCI on PUSCH>

In NR, it is assumed that PUSCH and PUCCH allocation is controlled in units of non-slot (for example, units of symbol) as described above. On the other hand, in UL communication, it is also required to achieve low PAPR (Peak-to-Average Power Patio) and/or low inter-modulation distortion (IMD). As a method of achieving low PAPR and/or low IMD in UL communication, there is a method of transmitting UCI and UL data multiplexed on a PUSCH when UCI transmission and UL data (UL-SCH) transmission occur at the same timing (may be referred to as UCI piggyback on PUSCH or UCI on PUSCH).

Even in NR, it is possible to use UCI on PUSCH as in the existing LTE system. However, when PUSCH allocation is controlled in units of symbol, how to control transmission and multiplexing of UCI and a DMRS (for example, a DMRS for PUSCH demodulation) is a problem.

For example, in NR, when UCI is piggybacked on a PUSCH (UCI on PUSCH), a study is also underway to control UCI and a DMRS such that they are not frequency multiplexed (FDM). For example, UCI and a DMRS are arranged in a time multiplexing (TDM) manner or the like.

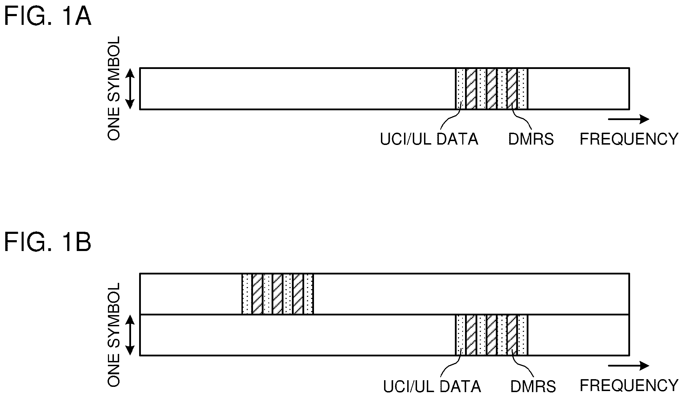

When FDM of UCI and DMRS is restricted in UCI on PUSCH, a configuration in which a UCI and DMRS are FDM multiplexed in one symbol of PUSCH (for example, see Fig. 1) cannot be used. Fig. 1A shows a case where a PUSCH is set to one symbol. This case corresponds to a configuration in which at least one of UCI data and UL data (hereinafter also referred to as UCI/UL data) and a DMRS are frequency-multiplexed. Fig. 1B shows a case where a PUSCH is set to two symbols and frequency hopping (hereinafter also referred to as FH) is used. This case corresponds to a configuration in which UCI/UL data and a DMRS are frequency-multiplexed in each of the symbols on which FH is used.

Note that the configuration usable for UCI on PUSCH is not limited to that shown in Fig. 1. For example, a sequence-based PUSCH configuration that does not include a reference signal or a PUSCH configuration in which a reference signal is inserted before DFT may be used.

When FDM of UCI and a DMRS is restricted in UCI on PUSCH as described above (for example, the configuration shown in Fig. 1), it becomes difficult to multiplex UCI and a DMRS in PUSCH of one symbol. When FH is used in a PUSCH of two symbols or three symbols, at least one of the first hop and the second hop of frequency hopping is transmission on a PUSCH of one symbol. In this case, it becomes difficult to multiplex UCI and a DMRS on one PUSCH of at least one of the first hop and the second hop.

When FDM of UCI and a DMRS is restricted in UCI on PUSCH as described above, UCI transmission using a PUSCH of one symbol, and UCI transmission using a PUSCH of two symbols or three symbols with FH may be restricted. This may cause UCI delay or the like, and then deteriorate the communication quality.

Therefore, in order to perform UCI transmission using a PUSCH of one symbol and a PUSCH of two to three symbols (with FH), it may be considered to allow (or make a configuration that can support) FDM of UCI and a DMRS in UCI on PUSCH.

On the other hand, when FDM of UCI and a DMRS are allowed in UCI on PUSCH, the rate matching process for UCI and so on becomes complicated, and the processing load of the UE may increase.

The present inventors have paid attention to the fact that rate matching of UCI and so on to the corresponding DMRS configuration type in consideration of a plurality of DMRS configuration types and so on is one of the causes of complication of the rate matching process, and come up with an idea of limiting at least one of DMRS setting and a DMRS configuration type when a given UCI on PUSCH is performed.

Now, embodiments according to the present invention will be described in detail. The embodiments described below may be used independently or in combination (for example, may be switched). In the description below, UCI multiplexing on a PUSCH will be described, but the embodiments may be applied to UCI multiplexing on a PUCCH. In the description below, as DMRS configuration types (also referred to as DMRS types), Type 1 and Type 2 are given as an example, but the number of DMRS types is not limited to two.

### (First Aspect)

In a first aspect, when performing a given UCI on PUSCH, a specific DMRS configuration (for example, at least one of a specific DMRS configuration type (hereinafter referred to as a DMRS type) and the number of additional DMRS symbols) is used.

A UE multiplexes UCI and a DMRS in the PUSCH (see Fig. 1) by using the specific DMRS type regardless of the DMRS type set by higher layer signaling or the like when performing the given UCI on PUSCH. For example, the UE FDM multiplexes a DMRS for a PUSCH used a specific DMRS type and UCI, and transmits the result on the PUSCH.

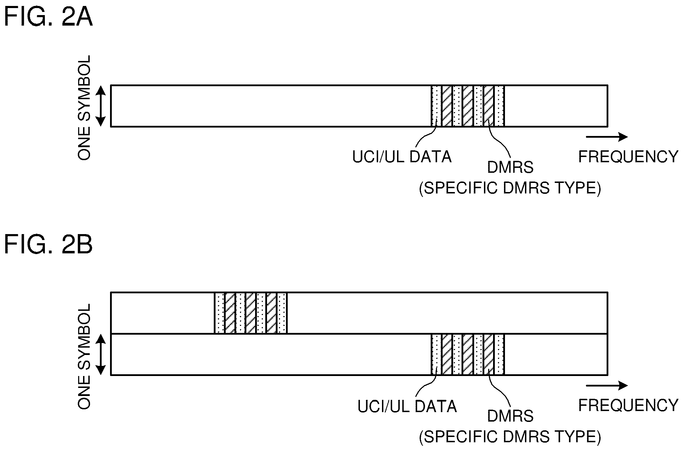

The given UCI on PUSCH may be UCI transmission using a given PUSCH configuration. The given PUSCH configuration may be at least one of a PUSCH of one symbol (see Fig. 2A), a PUSCH of two symbols with FH (see Fig. 2B) and a PUSCH of three symbols with FH. Obviously, the present invention is not limited to the configuration, and PUSCH of four symbols or more (and at least one of with and without FH) may be

### used.

The specific DMRS type may be a DMRS type defined in advance in the specification or the like. For example, a case where DMRS type 1 is defined as a specific DMRS type is assumed. In this case, the UE multiplexes UCI and a DMRS by using DMRS type 1 in a given UCI on PUSCH even when DMRS type 2 is set by higher layer signaling. For example, the UE controls the UCI rate matching process and so on using DMRS type 1 regardless of the DMRS type set by higher layer signaling or the like.

Note that the specific DMRS type may be reported from a base station to the UE. In this case, a base station may report a specific DMRS type to be used in a given UCI on PUSCH to a UE separately from the DMRS type to be used for the DMRS for the physical shared channel (for example, PUSCH). The information regarding the specific DMRS type may be reported from the base station to the UE by using at least one of higher layer signaling (for example, RRC signaling and so on) and downlink control information.

When a specific DMRS type is used as described above when performing a given UCI on PUSCH, it is possible to suppress complication of the rate matching process related to UCI, and to suppress an increase in the processing load of the UE. In addition, by allowing FDM of UCI and DMRS in UCI on PUSCH, flexible control of UCI transmission becomes possible.

Note that FDM of UCI and a DMRS in UCI on PUSCH may be allowed only in a given UCI on PUSCH (or a given PUSCH configuration).

### <Additional DMRS>

When performing a given UCI on PUSCH, a UE may use a given configuration as an additional DMRS.

As described above, in NR, the UE determines at least one of the number and position of the additional DMRS symbols based on the information regarding the number of the additional DMRS symbols reported by the higher layer parameter (for example, UL-DMRS-add-pos). Specifically, the number and location of additional DMRS symbols are determined referring to a predefined table based on information reported by higher layer signaling (for example, DMRS-add-pos), the duration to which the PUSCH is allocated (for example, the number of symbols), and a mapping type. DMRS-add-pos may be the maximum number of additional DMRS symbols.

In the present embodiment, when performing a given UCI on PUSCH, a UE may use a specific additional DMRS configuration regardless of a parameter of the additional DMRS reported by higher layer signaling (for example, UL-DMRS-add-pos). For example, in a given UCI on PUSCH, a UE may exercise control such that an additional DMRS is not used assuming that there is no additional DMRS (for example the number of additional DMRS symbol is 0).

As described above, by using a specific additional DMRS configuration (for example, the number of additional DMRS symbols is 0) when multiplexing UCI on PUSCH, complication of the rate matching process related to UCI can be suppressed. As a result, it is possible to suppress an increase in the processing load on the UE.

### (Second Aspect)

In the second aspect, transmission of UCI is controlled based on the set DMRS type.

Usually, a UE performs PUSCH transmission at a given timing when a PUSCH is scheduled by DCI or when PUSCH transmission that is not scheduled by DCI (also referred to as configured grant transmission) is set. Also, a UE transmits a DMRS for demodulating the PUSCH at the same time as the PUSCH based on the DMRS type set in the higher layer signaling or the like. In addition, when there is UCI to be transmitted at a PUSCH transmission timing, the UE multiplexes the UCI on the PUSCH and transmits the UCI.

In the second aspect, a UE multiplexes UCI on PUSCH and transmits the UCI (performs UCI on PUSCH) only when a specific DMRS type (for example, a first DMRS type) is set as a DMRS type for PUSCH. On the other hand, when a specific DMRS type is not set (for example, the second DMRS type is set), the UE exercises control such that UCI on PUSCH is not performed.

The specific DMRS type may be DMRS type 1. Alternatively, DMRS type 2 may be the specific DMRS type.

When a specific DMRS type (for example, the first DMRS type) is set, a UE FDM multiplexes the UCI and the DMRS for the PUSCH in which the first DMRS type is used, and transmits result on the PUSCH.

When a DMRS of a type other than the specific DMRS type (for example, the second DMRS) is set, the UE exercises control such that transmission is not performed on the PUSCH (for example, drops the PUSCH). In this case, the UE may transmit UCI using the PUCCH. As a result, it is possible to suppress an increase in the processing load on the UE due to UCI on PUSCH and also suppress UCI delay.

Alternatively, when a DMRS of a type other than the specific DMRS type (for example, the second DMRS) is set, a UE may drop the PUCCH (or UCI). In this case, the UE may use the second DMRS type to transmit signals other than the UCI using PUSCH on which the UCI is not multiplexed. As a result, it is possible to suppress an increase in the processing load on the UE due to UCI on PUSCH and also suppress delay of signals other than the UCI.

Also, only when transmission using a given PUSCH configuration is scheduled or set, the UE may control UCI transmission (for example, whether or not UCI on PUSCH is used) based on the DMRS type set in the higher layer signaling or the like.

The given PUSCH configuration may be at least one of a PUSCH of one symbol, a PUSCH of two symbols using FH, and a PUSCH of three symbols using FH. Obviously, the present invention is not limited to the configuration, and PUSCH of four symbols or more (and at least one of with and without FH) may be used. By this means, the DMRS type used in UCI on PUSCH needs to be restricted only for a specific PUSCH configuration, so that the DMRS type can be flexibly set in other PUSCH configurations.

In this way, by controlling the transmission of UCI (for example, whether or not UCI on PUSCH is used) based on the DMRS type set in the UE, complication of the rate matching process in UCI on PUSCH can be suppressed. As a result, it is possible to suppress an increase in the processing load on the UE. In addition, by allowing FDM of UCI and DMRS in UCI on PUSCH, flexible control of UCI transmission becomes possible.

Note that FDM of UCI and a DMRS in UCI on PUSCH may be allowed only in a given UCI on PUSCH (or a given PUSCH configuration).

### (Radio Communication System)

Now, the structure of a radio communication system according to one embodiment of the present invention will be described below. In this radio communication system, communication is performed using one or a combination of the radio communication methods according to the embodiments of the present invention described above.

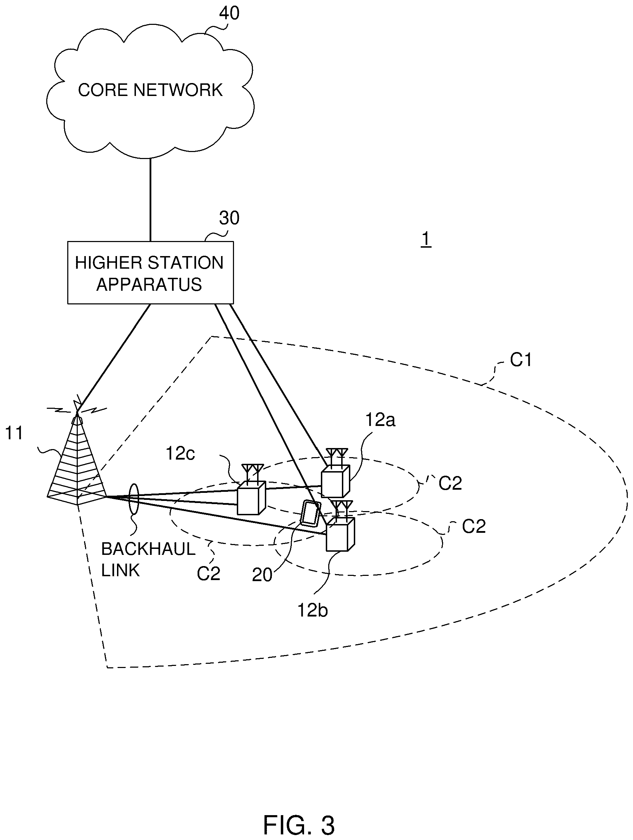

Fig. 3 is a diagram to show an example of a schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number and so on of cells and user terminals 20 are not limited to those illustrated in the drawings.

The user terminals 20 can connect with both the radio base station 11 and the radio base stations 12. The user terminals 20 may use the macro cell C1 and the small cells C2 at the same time using CA or DC. Furthermore, the user terminals 20 may apply CA or DC using a plurality of cells (CCs) (for example, five or fewer CCs or six or more CCs) .

Between the user terminals 20 and the radio base station 11, communication can be carried out using a carrier of a relatively low frequency band (for example, 2 GHz) and a narrow bandwidth (referred to as an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

The user terminals 20 can carry out communication in each cell using time division duplex (TDD) and/or frequency division duplex (FDD). In each cell (carrier), a single numerology may be used, or a plurality of different numerologies may be used.

The radio base station 11 and the radio base station 12 (or between 2 radio base stations 12) may be connected by wire (for example, means in compliance with the CPRI (Common Public Radio Interface) such as optical fiber, an X2 interface and so on) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) and so on are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and/or PUSCH scheduling information, and so on, is communicated by the PDCCH.

Note that scheduling information may be reported via DCI. For example, the DCI to schedule receipt of DL data may be referred to as "DL assignment," and the DCI to schedule transmission of UL data may be referred to as "UL grant."

The number of OFDM symbols to use for the PDCCH is communicated by the PCFICH. HARQ (Hybrid Automatic Repeat reQuest) delivery acknowledgement information (also referred to as, for example, "retransmission control information," "HARQ-ACKs," "ACK/NACKs," etc.) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgement information, scheduling requests (SRs) and so on are communicated. By means of the PRACH, random access preambles for establishing connections with cells are communicated.

In the radio communication systems 1, cell-specific reference signals (CRSs), channel state information-reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that, DMRSs may be referred to as "user terminal-specific reference signals (UE-specific Reference Signals)." Also, the reference signals to be communicated are by no means limited to these.

### (Radio Base Station)

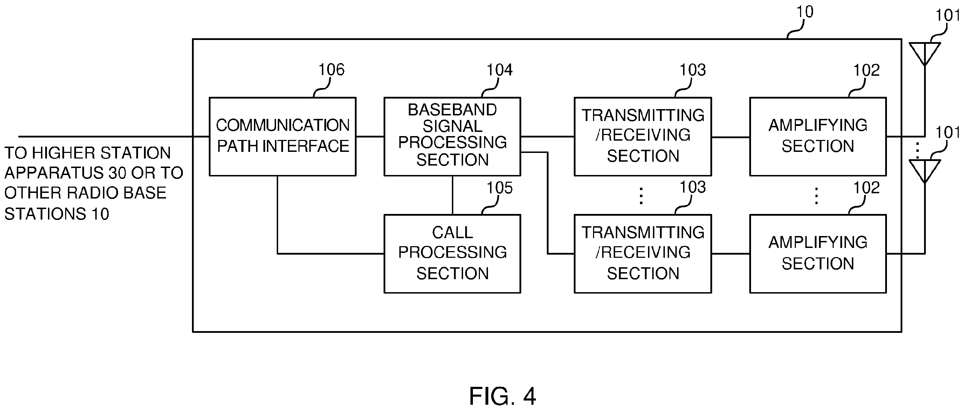

Fig. 4 is a diagram to show an example of an overall structure of a radio base station according to one embodiment of the present invention. Each radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided, respectively.

User data to be transmitted from the radio base station 10 to a user terminal 20 on the downlink is input from the higher station apparatus 30 to the baseband signal processing section 104, via the communication path interface 106.

In the baseband signal processing section 104, user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are pre-coded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface 106 transmits and receives signals to and from the higher station apparatus 30 via a given interface. Also, the communication path interface 106 may transmit and receive signals (backhaul signaling) with other radio base stations 10 via an interbase station interface (which is, for example, optical fiber that is in compliance with the CPRI (Common Public Radio Interface), the X2 interface, etc.).

Also, the transmitting/receiving sections 103 receive the UCI and a DMRS (for example, DMRS for PUSCH) transmitted by using the PUSCH (or together with the PUSCH) set to one or more symbols. Furthermore, the transmitting/receiving sections 103 may transmit, using higher layer signaling or the like, at least one of information regarding the DMRS type, information regarding the additional DMRS, and information regarding whether or not FH is used.

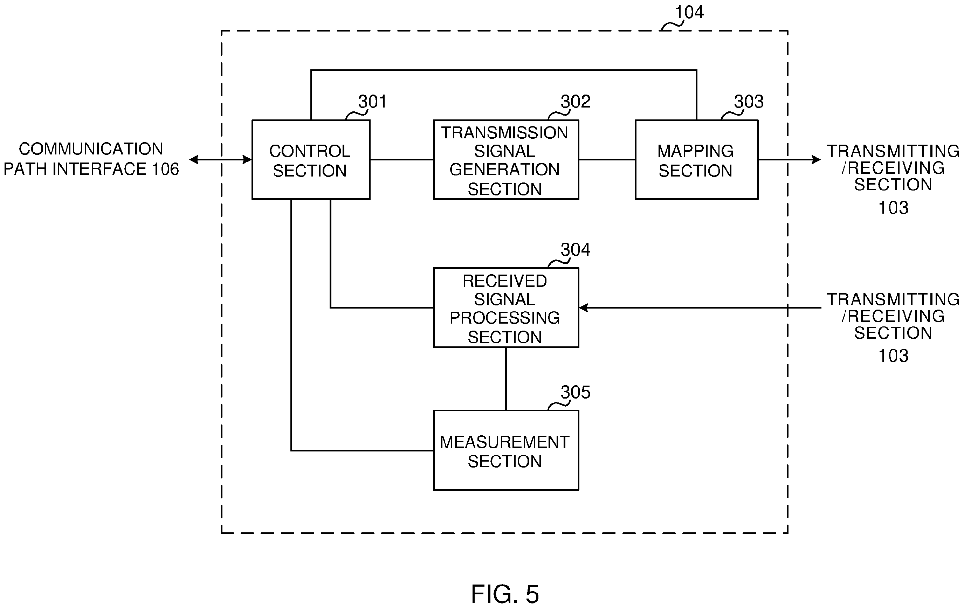

Fig. 5 is a diagram to show an example of a functional structure of a radio base station according to one embodiment of the present invention. Note that, although this example will primarily show functional blocks that pertain to characteristic parts of the present embodiment, it may be assumed that the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals in the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

The control section 301 also controls the scheduling of uplink data signals (for example, signals transmitted in the PUSCH), uplink control signals (for example, signals transmitted in the PUCCH and/or the PUSCH, such as delivery acknowledgement information), random access preambles (for example, signals transmitted in the PRACH), uplink reference signals, and/or other signals.

Also, the control section 301 controls at least one of the DMRS type used by the UE, the additional DMRS, whether or not FH is used and so on.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generation apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding process, the modulation process and so on, by using coding rates and modulation schemes that are determined based on, for example, channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information that is acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), channel information (for example, CSI), and so on. The measurement results may be output to the control section 301.

### (User Terminal)

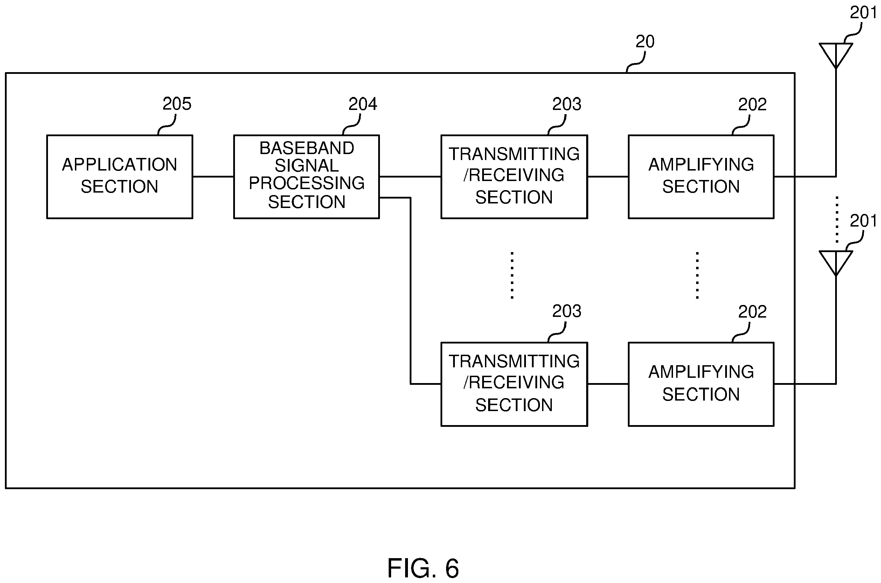

Fig. 6 is a diagram to show an example of an overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided, respectively.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitters/receiver, a transmitting/receiving circuit or transmitting/receiving apparatus that can be described based on general understanding of the technical field to which the present invention pertains. Note that the transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Also, the transmitting/receiving sections 203 transmit the UCI and DMRS (for example, DMRS for PUSCH) using the PUSCH (or together with the PUSCH) set to one or more symbols. Furthermore, the transmitting/receiving sections 203 may receive, using higher layer signaling or the like, at least one of information regarding the DMRS type, information regarding the additional DMRS, and information regarding whether or not FH is used.

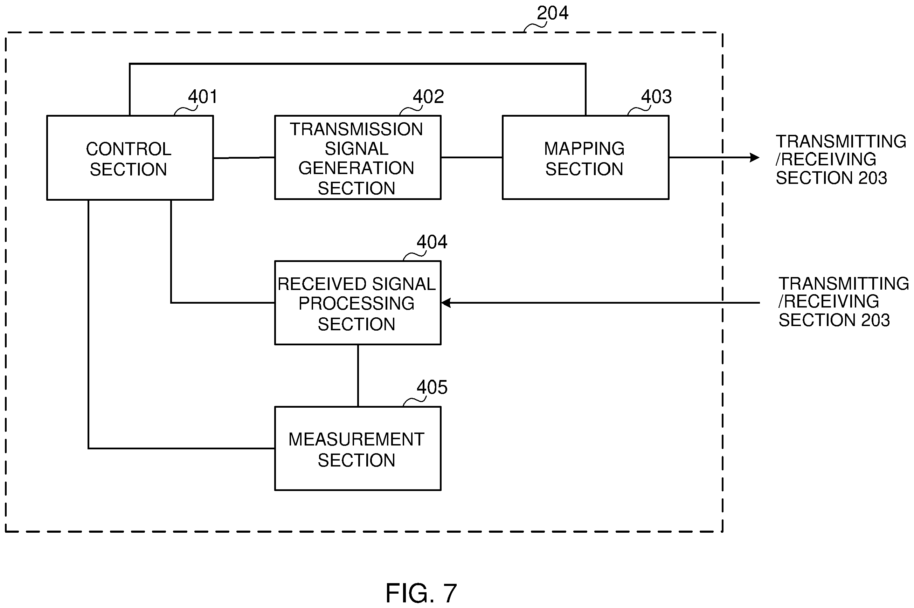

Fig. 7 is a diagram to show an example of a functional structure of a user terminal according to one embodiment of the present invention. Note that, although this example will primarily show functional blocks that pertain to characteristic parts of the present embodiment, it may be assumed that the user terminals 20 have other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit or control apparatus that can be described based on general understanding of the technical field to which the present invention pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

Also, when using a given PUSCH configuration (or a given UCI on PUSCH), the control section 401 uses a specific DMRS configuration to control DMRS transmission.

For example, when transmitting UCI using a given PUSCH configuration, the control section 401 may use a specific DMRS type regardless of the DMRS type set by higher layer signaling. Furthermore, when transmitting UCI using a given PUSCH configuration, the control section 401 may use a given number of DMRSs (for example, the number of additional DMRSs may be assumed to be 0) regardless of information that regards the number of symbols to which the DMRS is allocated and that is set by higher layer signaling.

Also, the control section 401 may control transmission of UCI based on the set DMRS type. For example, the control section 401 may perform control such that UCI is transmitted using the PUSCH when a specific DMRS type is set, and UCI is not transmitted using the PUSCH (UCI on PUSCH) when a DMRS type other than the specific DMRS type is set.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generation apparatus that can be described based on general understanding of the technical field to which the present invention pertains.

For example, the transmission signal generation section 402 generates uplink control signals such as delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving section 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), channel information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically aggregated, or may be realized by directly or indirectly connecting two or more physically or logically separate pieces of apparatus (via wire or wireless, for example) and using these multiple pieces of apparatus.

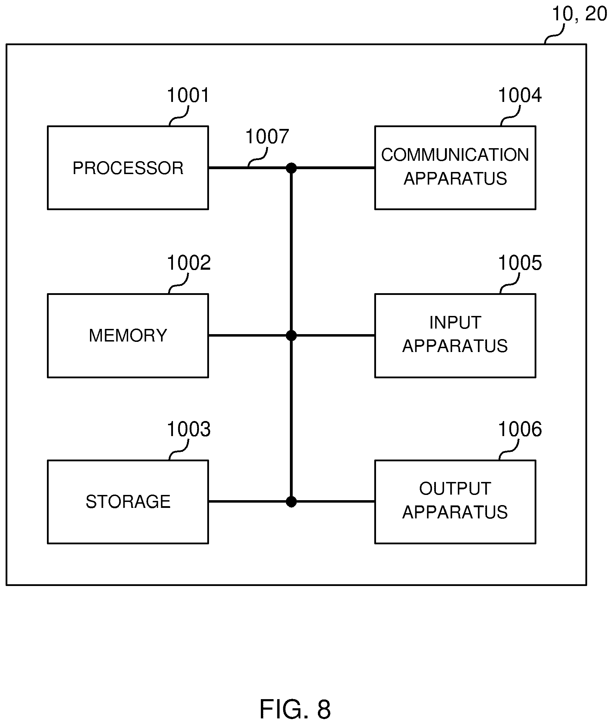

For example, the radio base station, user terminals and so on according to one embodiment of the present disclosure may function as a computer that executes the processes of the radio communication method of the present disclosure. Fig. 8 is a diagram to show an example hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be interpreted as "circuit," "device," "unit" and so on. Note that the hardware structure of the radio base stations 10 and the user terminals 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in parallel, in sequence, or in different manners, on one or more processors. Note that the processor 1001 may be implemented with one or more chips.

Each function of the radio base station 10 and the user terminal 20 is implemented by reading given software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with a peripheral apparatus, a control apparatus, a computing apparatus, a register and so on. For example, the above-described baseband signal processing section 104 (204), call processing section 105 and so on may be implemented by the processor 1001.

Furthermore, the processor 1001 reads programs (program codes), software modules, data and so on, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and/or the like for implementing the radio communication methods according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disc), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using at least one of wired network and wireless network, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced by other terms that convey the same or similar meanings. For example, "channels" and "symbols" may be replaced by "signals" (or "signaling"). Also, "signals" may be replaced by "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

A radio frame may be comprised of one or more periods (frames) in the time domain. Each of one or more periods (frames) constituting a radio frame may be referred to as a "subframe." Furthermore, a subframe may be comprised of one or multiple slots in the time domain. A subframe may be a fixed time duration (for example, 1 ms) not dependent on the numerology.

Here, the numerology may be a communication parameter used for at least one of transmission and reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame structure, a specific filtering process to be performed by a transceiver in the frequency domain, a specific windowing process to be performed by a transceiver in the time domain and so on.

A slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

Also, a slot may include a plurality of minislots. Each minislot may be comprised of one or more symbols in the time domain. Also, a minislot may be referred to as a "subslot." Each minislot may be comprised of fewer symbols than a slot. A PDSCH (or PUSCH) transmitted in a time unit larger than a minislot may be referred to as PDSCH (PUSCH) mapping type A. A PDSCH (or PUSCH) transmitted using a minislot may be referred to as PDSCH (PUSCH) mapping type B.

A radio frame, a subframe, a slot, a minislot and a symbol all represent the time unit in signal communication. A radio frame, a subframe, a slot, a minislot and a symbol may be each called by other applicable names.

For example, one subframe may be referred to as a "transmission time interval (TTI)," or a plurality of consecutive subframes may be referred to as a "TTI," or one slot or one minislot may be referred to as a "TTI." That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "minislot" and so on, instead of a "subframe."

Here, a TTI refers to the minimum time unit of scheduling in radio communication, for example. For example, in LTE systems, a radio base station schedules the radio resources (such as the frequency bandwidth and transmit power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that, when a TTI is given, the period of time (for example, the number of symbols) in which transport blocks, code blocks, codewords and so on are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time duration of 1 ms may be referred to as a "normal TTI (TTI in LTE Rel. 8 to 12)," a "normal TTI, a "long TTI," a "normal subframe," a "long subframe," and so on. A TTI that is shorter than a normal TTI may be referred to as a "shortened TTI," a "short TTI," "a partial TTI" (or a "fractional TTI"), a "shortened subframe," a "short subframe," a "minislot," "a subslot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain.

Also, an RB may include one or more symbols in the time domain, and may be one slot, one minislot, one subframe or one TTI in length. One TTI and one subframe each may be comprised of one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, minislots, symbols and so on described above are merely examples. For example, configurations pertaining to the number of subframes included in a radio frame, the number of slots included in a subframe, the number of minislots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in the present disclosure, and other methods may be used as well. For example, reporting of information may be implemented by using physical layer signaling (for example, downlink control information (DCI) or uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup (RRCConnectionSetup) message, RRC connection reconfiguration (RRCConnectionReconfiguration) message, and so on. Also, MAC signaling may be reported using, for example, MAC control elements (MAC CEs (Control Elements)).

Also, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSL) and so on) and wireless technologies (infrared radiation, microwaves and so on), at least one of these wired technologies and wireless technologies are also included in the definition of communication media.

The terms "system" and "network" as used in the present disclosure are used interchangeably.

In the present disclosure, the terms "base station (BS)", "radio base station", "fixed station", "NodeB", "eNodeB (eNB)", "gNodeB (gNB)", " "access point", "transmission point", "reception point", "transmission/reception point", "cell", "sector", "cell group", "carrier", "component carrier", "bandwidth part (BWP)" may be used interchangeably. A base station may be referred to as a macro cell, a small cell, a femto cell, a pico cell and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of at least one of a base station and a base station subsystem that provides communication services within this coverage.

As used in the present disclosure, the terms "mobile station (MS)" "user terminal," "user equipment (UE)", "terminal" and so on may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

At least one of a base station and a mobile station may be referred to as transmitting apparatus, receiving apparatus and so on. Note that at least one of a base station and a mobile station may be a device mounted on a moving body, a moving body itself and so on. The moving body may be a transportation (for example, a car, an airplane and so on), an unmanned moving body (for example, a drone, an autonomous car and so on), or a (manned or unmanned) robot. Note that at least one of a base station and a mobile station includes apparatus that does not necessarily move during a communication operation.

Furthermore, the radio base stations in the present disclosure may be interpreted as user terminals. For example, each aspect/embodiment of the present disclosure may be applied to a configuration in which communication between a radio base station and a user terminal is replaced with communication among a plurality of user terminals (may be referred to as, for example, D2D (Device-to-Device), V2X (Vehicle-to-Everything) and so on). In this case, user terminals 20 may have the functions of the radio base stations 10 described above. In addition, terms such as "uplink" and "downlink" may be interpreted as a term corresponding to communication between terminals (for example, "side"). For example, an uplink channel, a downlink channel and so on may be interpreted as a side channel.

Likewise, the user terminals in the present disclosure may be interpreted as radio base stations. In this case, the radio base stations 10 may have the functions of the user terminals 20 described above.

Certain actions which have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated in the present disclosure are by no means limiting.

The aspects/embodiments illustrated in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these. Also, a plurality of systems may be combined (for example, LTE or LTE-A and 5G may be combined) and the aspects/embodiments may be applied to the combination.

The phrase "based on" as used in the present disclosure does not mean "based only on," unless otherwise specified. In other words, the phrase "based on" means both "based only on" and "based at least on."

Reference to elements with designations such as "first," "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, to "judge" and "determine" as used herein may be interpreted to mean making judgements and determinations related to judging, calculating, computing, processing, deriving, investigating, looking up (for example, searching a table, a database or some other data structure), ascertaining and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access."

As used in the present disclosure, when two elements are connected, these elements may be considered "connected" or "coupled" to each other by using one or more electrical wires, cables, printed electrical connections and so on, and, as a number of non-limiting and non-inclusive examples, by using electromagnetic energy, such as electromagnetic energy having wavelengths in the radio frequency, microwave and optical (both visible and invisible) regions.

In the present disclosure, the phrase "A and B are different" may mean "A and B are different from each other." The terms such as "leave", "coupled" and the like may be interpreted similarly.

When terms such as "include," "including" and variations of these are used in the present disclosure, these terms are intended to be inclusive, in a manner similar to the way the term "comprising" is used. Furthermore, the term "or" as used in the present disclosure is intended to be not an exclusive disjunction.

In the present disclosure, when articles, such as "a", "an", and "the" in English are added by translation, the present disclosure may cover states where the noun that follows these articles is in the plural form.

Now, although the invention according to the present disclosure has been described in detail above, it should be obvious to a person skilled in the art that the invention according to the present discloser is by no means limited to the embodiments described in the present disclosure. The invention according to the present disclosure can be implemented with various corrections and in various modifications. Consequently, the description of the present disclosure is provided only for the purpose of explaining examples, and should by no means be construed to limit the invention according to the present disclosure in any way.

## Claims

1. A user terminal (20) comprising:
a transmitting section (203) configured to transmit uplink control information and a demodulation reference signal, DMRS, using an uplink shared channel set to one or more symbols;
a control section (401) configured to control transmission of the DMRS using a specific DMRS configuration, wherein
the specific DMRS configuration comprises a DMRS type; and wherein
the control section (401) is further configured to
control transmission of the uplink control information based on the DMRS type, and
to transmit the uplink control information using the uplink shared channel when a specific DMRS type is set, and
the control section is configured to not transmit the uplink control information using the uplink shared channel when a DMRS type other than the specific DMRS type is set.

2. A radio communication method for a user terminal, comprising the steps of:
transmitting uplink control information and a demodulation reference signal, DMRS, using an uplink shared channel set to one or more symbols;
controlling transmission of the DMRS using a specific DMRS configuration, wherein
the specific DMRS configuration comprises a DMRS type;
controlling transmission of the uplink control information based on the DMRS type,
transmitting the uplink control information using the uplink shared channel when a specific DMRS type is set, and
not transmitting the uplink control information using the uplink shared channel when a DMRS type other than the specific DMRS type is set.

## Patentansprüche

1. Benutzerendgerät (20), umfassend:
einen Sendeabschnitt (203), der konfiguriert ist, um Uplink-Steuerinformationen und ein Demodulationsreferenzsignal, DMRS, unter Verwendung eines gemeinsamen Uplink-Kanals, der auf ein oder mehrere Symbole eingestellt ist, zu senden;
einen Steuerabschnitt (401), der konfiguriert ist, um die Sendung des DMRS unter Verwendung einer spezifischen DMRS-Konfiguration zu steuern, wobei
die spezifische DMRS-Konfiguration einen DMRS-Typ umfasst; und wobei
der Steuerabschnitt (401) weiter konfiguriert ist, um die Sendung der Uplink-Steuerinformationen auf Basis des DMRS-Typs zu steuern, und
die Uplink-Steuerinformationen unter Verwendung des gemeinsamen Uplink-Kanals zu senden, wenn ein spezifischer DMRS-Typ eingestellt ist, und
der Steuerabschnitt konfiguriert ist, um die Uplink-Steuerinformationen nicht unter Verwendung des gemeinsamen Uplink-Kanals zu senden, wenn ein anderer DMRS-Typ als der spezifische DMRS-Typ eingestellt ist.

2. Funkkommunikationsverfahren für ein Benutzerendgerät, das die folgenden Schritte umfasst:
Senden von Uplink-Steuerinformationen und eines Demodulationsreferenzsignals, DMRS, unter Verwendung eines gemeinsamen Uplink-Kanals, der auf ein oder mehrere Symbole eingestellt ist;
Steuern der Sendung des DMRS unter Verwendung einer spezifischen DMRS-Konfiguration, wobei
die spezifische DMRS-Konfiguration einen DMRS-Typ umfasst;
Steuern der Sendung der Uplink-Steuerinformationen auf Basis des DMRS-Typs,
Senden der Uplink-Steuerinformationen unter Verwendung des gemeinsamen Uplink-Kanals, wenn ein spezifischer DMRS-Typ eingestellt ist, und
Nicht-Senden der Uplink-Steuerinformationen unter Verwendung des gemeinsamen Uplink-Kanals, wenn ein anderer DMRS-Typ als der spezifische DMRS-Typ eingestellt ist.

## Revendications

1. Terminal utilisateur (20) comprenant :
une section de transmission (203) configurée pour transmettre des informations de commande de liaison montante et un signal de référence de démodulation, DMRS, au moyen d'un canal partagé en liaison montante défini pour un ou plusieurs symboles ;
une section de commande (401) configurée pour commander la transmission du DMRS au moyen d'une configuration de DMRS spécifique, dans lequel
la configuration de DMRS spécifique comprend un type de DMRS ; et dans lequel
la section de commande (401) est en outre configurée pour commander la transmission des informations de commande de liaison montante sur la base du type de DMRS, et
pour transmettre les informations de commande de liaison montante au moyen du canal partagé en liaison montante quand un type de DMRS spécifique est défini, et
la section de commande est configurée pour ne pas transmettre les informations de commande de liaison montante au moyen du canal partagé en liaison montante quand un type de DMRS autre que le type de DMRS spécifique est défini.

2. Procédé de communication radio pour un terminal utilisateur, comprenant les étapes consistant à :
transmettre des informations de commande de liaison montante et un signal de référence de démodulation, DMRS, au moyen d'un canal partagé en liaison montante défini sur un ou plusieurs symboles ;
commander la transmission du DMRS au moyen d'une configuration de DMRS spécifique, dans lequel
la configuration de DMRS spécifique comprend un type de DMRS ;
commander la transmission des informations de commande de liaison montante sur la base du type de DMRS,
transmettre les informations de commande de liaison montante au moyen du canal partagé en liaison montante quand un type de DMRS spécifique est défini, et
ne pas transmettre les informations de commande de liaison montante au moyen du canal partagé en liaison montante quand un type de DMRS autre que le type de DMRS spécifique est défini.
